## Europäisches Patentamt
## European Patent Office
## Office européen des brevets

(19)

(11) Veröffentlichungsnummer: **0 019 144**
**B1**

(12)

# EUROPÄISCHE PATENTSCHRIFT

(45) Veröffentlichungstag der Patentschrift:
27.07.83

(51) Int. Cl.³: **B 62 J 5/00**, B 60 Q 1/00

(21) Anmeldenummer: **80102322.7**

(22) Anmeldetag: **30.04.80**

(54) **Batterie für die Zweiradbeleuchtung.**

(30) Priorität: **12.05.79 DE 2919211**

(43) Veröffentlichungstag der Anmeldung:
**26.11.80 Patentblatt 80/24**

(45) Bekanntmachung des Hinweises auf die Patenterteilung:
**27.07.83 Patentblatt 83/30**

(84) Benannte Vertragsstaaten:
**AT BE CH FR GB IT LI LU NL SE**

(56) Entgegenhaltungen:
**DE-A-2 729 849**
**DE-A-2 821 853**
**DE-U-7 823 245**
**FR-A-643 615**

**Die Akte enthält technische Angaben, die nach dem Eingang der Anmeldung eingereicht wurden und die nicht in dieser Patentschrift enthalten sind.**

(73) Patentinhaber: **ESGE-Marby GmbH + Co. KG., Braker Strasse 1, D-4800 Bielefeld 16 (DE)**

(72) Erfinder: **Spingler, Werner, Amtsgartenweg 9, D-7847 Badenweiler (DE)**

(74) Vertreter: **Scherrmann, Walter, Dipl.-Ing. et al, Webergasse 3, D-7300 Esslingen (DE)**

BUNDESDRUCKEREI BERLIN

Batterie für die Zweiradbeleuchtung

Die Erfindung betrifft eine am Zweirad lösbar zu befestigende, wiederaufladbare und durch einen Umschalter wechselweise mit der Lichtmaschine wirksam zu machende Batterie für die Zweiradbeleuchtung, die gemeinsam mit dem Umschalter in einem Gehäuse angeordnet ist, das am Lenkervorbau des Zweirades lösbar befestigt ist.

Bei einer bekannten Batterie für die Zweiradbeleuchtung (DE-U-7 823 245) mit diesen Merkmalen ist die Batterie gemeinsam mit dem Umschalter und den zugeordneten elektrischen Schaltelementen in einer Ausführungsform in dem Gehäuse der Frontleuchte untergebracht, die ihrerseits mittels einer Schelle in der üblichen Weise an dem Lenkervorbau eines Fahrrades befestigt ist. Bei einem Fahrrad sind aber die Abmessungen des Frontleuchtengehäuses von Hause aus begrenzt; außerdem besteht immer die Gefahr, daß beim Einbau schwererer Teile, wie etwa einer Batterie, in das Frontleuchtengehäuse sich die einmal eingestellte Beleuchtungsrichtung bei der Fahrt im Laufe der Zeit verändert. Das Frontleuchtengehäuse ist nämlich durchweg mittels einer Klemmschraube um eine horizontale Achse verstellbar an der Schelle befestigt, um damit die Beleuchtungsrichtung einstellen zu können.

Bei einer anderen Ausführungsform dieses Gerätes ist ein die Batterie gemeinsam mit dem Umschalter und den zugeordneten elektrischen Schaltelementen aufnehmendes, eigenes kastenartiges Gehäuse vorgesehen, das an der Vorderradgabel des Fahrrades im Abstand von dem Dynamo befestigt werden soll. Wegen des beträchtlichen Gewichtes einer wiederaufladbaren Batterie größerer Leistung erhält aber dieses Gehäuse notwendigerweise eine Größe, die gemeinsam mit dem Gewicht des ganzen Gerätes bei einer solchen einseitigen Anbringung bereits das Fahrverhalten des Fahrrades beeinflußt. Außerdem ist das Gerätegehäuse unmittelbar neben dem Rad einer beträchtlichen Verschmutzungsgefahr und Nässeinwirkung ausgesetzt. Die Batterie kann deshalb notwendigerweise nur eine verhältnismäßig geringe Leistung aufweisen; schon wegen des Gewichtes des Netztransformators wäre es beispielsweise kaum möglich, zusätzlich noch eine Netzaufladevorrichtung vorzusehen.

Bei beiden erwähnten Ausführungsformen bietet sich für den Benutzer des Fahrrades keine Möglichkeit, sich über den Ladezustand der Batterie und die Funktion des von ihr betriebenen Scheinwerfers und insbesondere des Schlußlichtes Gewißheit zu verschaffen.

Bei einer bekannten Fahrzeug-Signallampeneinrichtung zur Anbringung an Fahrzeuglenkern (DE-A-2 729 849) sind an der Lenkstange eines Fahr- oder Motorrades zwei jeweils mit einer Signallampe für die Fahrtrichtungsanzeige vereinigte Rückspiegel befestigt, wobei die Batterie zur Betätigung der Signallampen in einem Gehäuse angeordnet ist, das mit einer Schelle an der Lenkstange befestigt ist. Die Fahrtrichtungsanzeiger sind mit Hilfe eines Dreistellungsschalters an dem Gehäuse, jedoch auch mit Hilfe einer Fernsteuerung an der Lenkstange zu betätigen.

Eine wahlweise Speisung der in den beiden Rückspiegeln untergebrachten Signallampen durch die Lichtmaschine ist dabei nicht vorgesehen, so daß auch ein entsprechender Umschalter nicht vorhanden ist. Ebenso sind keine Anzeigevorrichtungen für den Ladezustand der Batterie und die Funktion von Scheinwerfer und Schlußlicht vorhanden; auch ist die Anbringung des die Batterie enthaltenden Gehäuses nur unter einsetiger Belastung des Lenkers möglich und schon aus ästhetischen Gründen insbesondere dann unzweckmäßig, wenn die wiederaufladbare Batterie größere Abmessungen aufweist.

Schließlich ist noch eine Beleuchtungsanlage für ein Motorrad bekannt (FR-A-643 615), die ein Armaturenbrett aufweist, das entweder in eine entsprechende Aussparung des als Blechformteil ausgebildeten Mittelteiles des Motorradlenkers oder in eine entsprechende kastenartige Einbuchtung des Benzintankes fest eingebaut ist. Das Armaturenbrett trägt ein Ladezustandsanzeigegerät für die Batterie, Überwachungslampen und eine Armaturenbrettbeleuchtungslampe sowie zwei Stellschalter. Die übrigen Teile der elektrischen Anlage einschließlich der Batterie sind aber in der bei Motorrädern üblichen Weise im Bereiche des Motorblockes an verteilten, jeweils zweckentsprechenden Stellen angeordnet. Bei dieser elektrischen Anlage sind deshalb die Batterie und die anderen Elemente getrennte Teile, die nicht in einem gemeinsamen Gehäuse untergebracht sind.

Aufgabe der Erfindung ist es, eine Batterie für die Zweiradbeleuchtung der eingangs genannten Art in dem Sinne zu verbessern, daß dem Benutzer des Zweirades eine einfache Möglichkeit für die Hantierung der Batterie und des Umschalters sowie für die Überwachung der Funktion des mit der Batterie verbundenen Scheinwerfers und des Schlußlichtes ermöglicht ist.

Zur Lösung dieser Aufgabe weist erfindungsgemäß das Gehäuse zusätzlich eine in der Blickrichtung des Fahrers befindliche Anzeigevorrichtung über den Ladezustand der Batterie und über die Funktion von Scheinwerfer und Schlußlicht auf.

Zweckmäßigerweise enthält das Gehäuse auch das Netzladegerät für die Batterie, während die Anzeigevorrichtung zwei auf der Oberseite des Gehäuses angeordnete Kontrollampen enthalten kann. Auch kann an dem Gehäuse ein Anschluß für einen Solargenerator vorgesehen sein, der dann in einer vorteilhaften Ausführungsform auf das Gehäuse aufsteckbar ist.

Sehr einfache konstruktive Verhältnisse ergeben sich, wenn an der Hinterwand des Gehäuses eine prismenförmige Ausnehmung ausgebildet ist, in die sich der nach unten weisende Teil und der waagerechte Teil des Lenkervorbaus einlegen, wobei die Ausnehmung teilweise durch einen starren schellenartigen Ansatz an der Hinterwand des Gehäuses gebildet ist. Dabei können in Bohrungen der starren Schellen des Ansatzes Befestigungsbolzen mit konischen Enden eingreifen, die unter der Wirkung einer in sie eingebrachten Befestigungsschraube zusammenziehbar sich gegen den Lenkervorbau anlegen. Ist, wie erwähnt, ein Solargenerator vorhanden, so kann dieser gleich auf die waagerechte Brücke des schellenartigen Ansatzes aufsetzbar sein, wobei in einer Ausführungsform der Solargenerator an der waagerechten Brücke des schellenartigen Ansatzes durch eine Stiftverbindung lösbar befestigbar sein kann. Der Solargenerator kann auch von ihm nach unten abstehende Befestigungsflügel aufweisen, die gemeinsam mit den Schellen des Ansatzes des Gehäuses an dem Lenkervorbau befestigbar sein.

Das Gehäuse ist in der Regel in einer in der Blickrichtung des Fahrers liegenden Lage am Lenkervorbau des Zweirades lösbar anbringbar. Die Anordnung kann aber auch derart getroffen sein, daß das Gehäuse anstatt an den Lenkervorbau an der Lenkgabel im Bereich der Vorderradbremse lösbar befestigbar ist. In jedem Falle führt die gemeinsame Unterbringung der Batterie und des Zubehörs in einem einzigen Gehäuse zu einer einfachen Hantierung für den Benutzer und die Anbringung der Anzeigeeinrichtung an dem Gehäuse im Blickfeld des Fahrers zu einer mühelosen Dauerüberwachung des Ladezustandes der Batterie und der Funktion von Scheinwerfer und Schlußlicht.

Weiterbildungen der Erfindung sind noch Gegenstand der weiteren Unteransprüche.

In der Zeichnung sind mehrere Ausführungsbeispiele des Gegenstandes der Erfindung dargestellt. Es zeigt

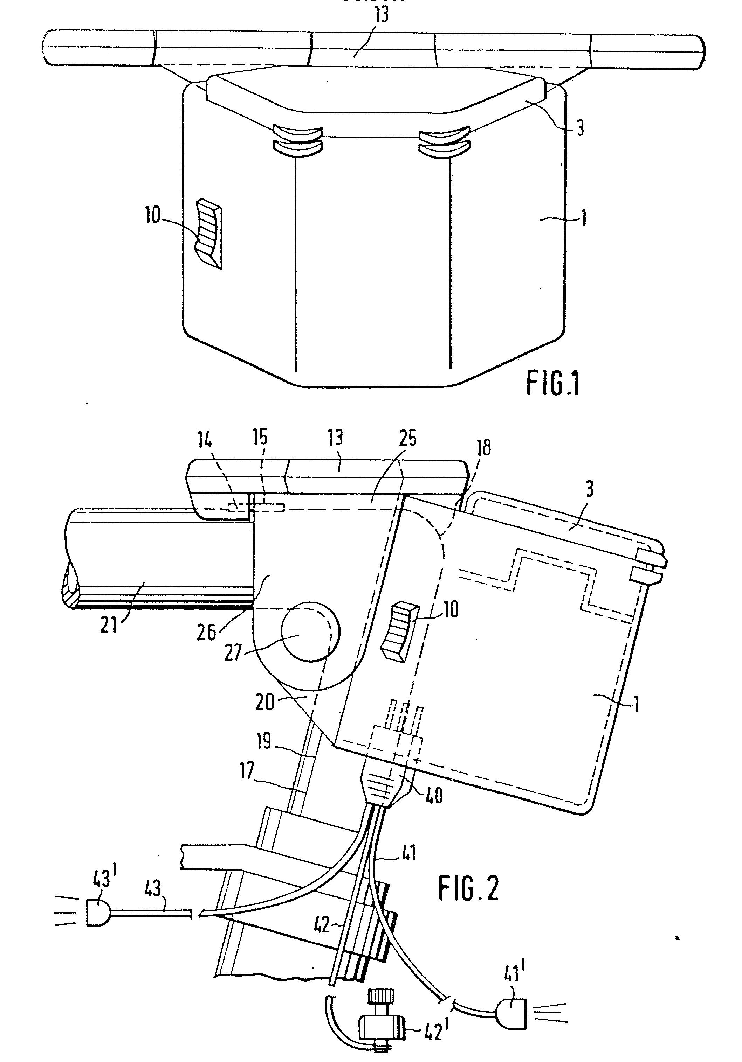

Fig. 1 eine die Batterie, den Umschalter und die Anzeigeeinrichtung enthaltendes Gehäuse gemäß der Erfindung in einer Vorderansicht,

Fig. 2 das Gehäuse unter Andeutung seiner Anbringung am Lenkervorbau eines Zweirades in einer Seitenansicht,

Fig. 3 das Gehäuse in einer Draufsicht,

Fig. 4 das Gehäuse nach Abnahme des Solargenerators und des Deckels für den Batterieraum, ebenfalls in einer Draufsicht,

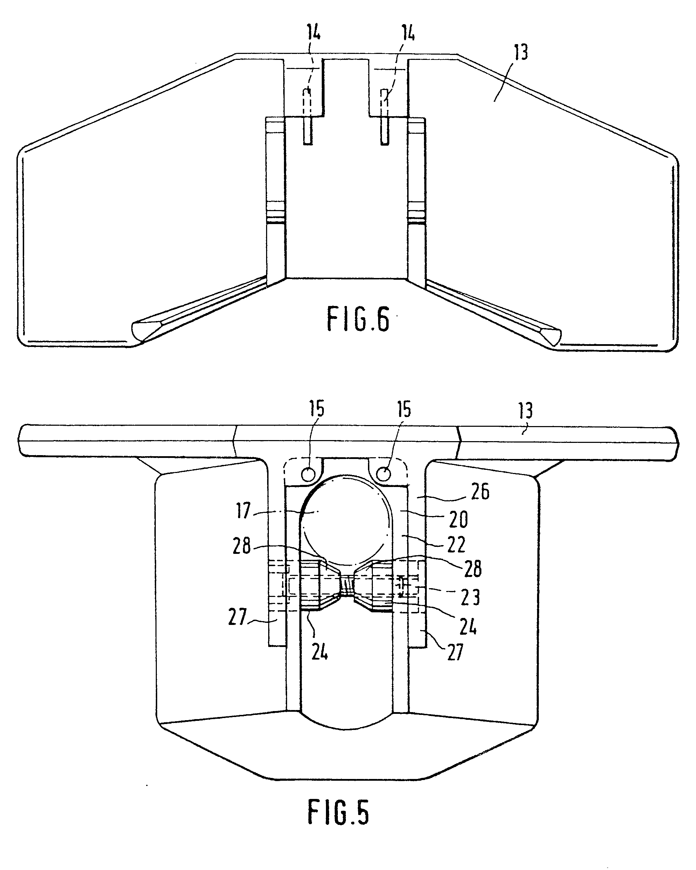

Fig. 5 das Gehäuse in einer Ansicht von hinten,

Fig. 6 den Solargenerator für sich allein in einer Ansicht von unten,

Fig. 7 das Gehäuse unter Befestigung an der Lenkgabel in einer Seitenansicht,

Fig. 8 das Gehäuse nach Fig. 7 in einer Vorderansicht,

Fig. 9 eine Verbindungskupplung als Strombrücke zwischen Lichtmaschine und der Beleuchtung nach Abnahme der Batterie in einer Vorderansicht,

Fig. 10 die Verbindungskupplung in einer Seitenansicht und

Fig. 11 die Verbindungskupplung in einer Draufsicht.

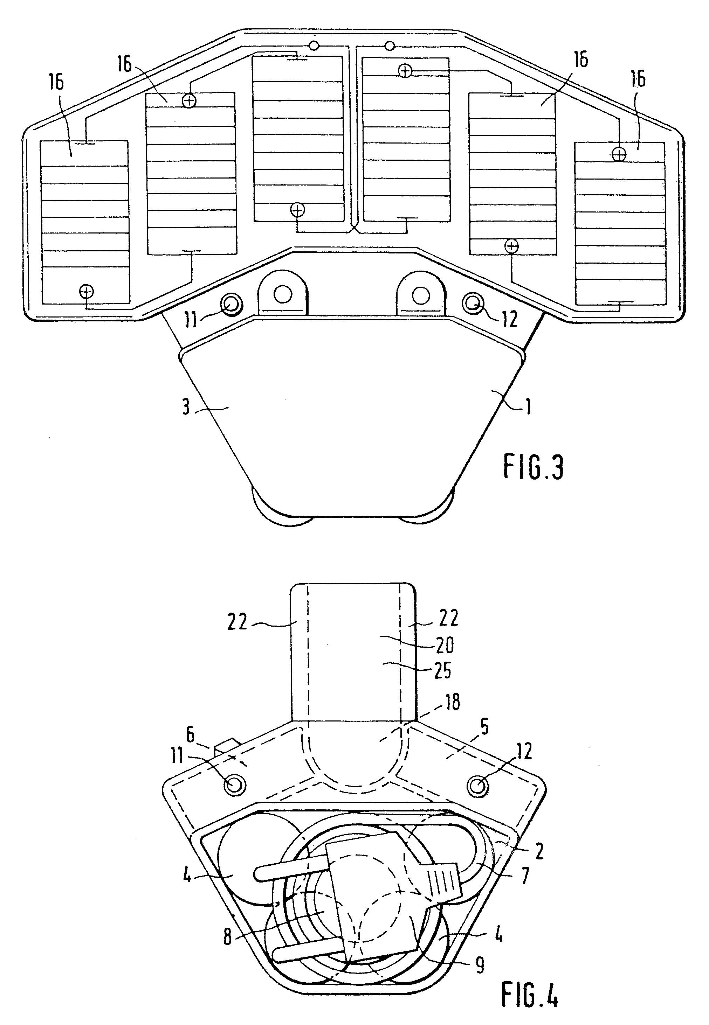

Bei dem Gehäuse 1 ist ein vorderer Batterieraum 2 durch einen Deckel 3 abgedeckt. In dem Batterieraum 2 befinden sich die die austauschbare Batterie zusammensetzenden Elemente 4. Außer dem Batterieraum 2 sind in dem Gehäuse 1 zwei hintere seitliche Räume 5 und 6 vorgesehen (Fig. 4), von denen der Raum 5 zur Unterbringung eines Netzladegerätes und der Raum 6 zur Unterbringung der elektronischen Schaltmittel, wie einer Diode u. dgl., dient. Diese sind mit dem Netz über eine Anschlußschnur 7 zu verbinden, die um einen zylindrischen Körper 8 in dem Batterieraum 2 herumgewickelt ist. Sie endet in einem Flachstecker 9 für den Netzanschluß, der ebenfalls noch oben in den Batterieraum 2 eingebracht ist.

Vorne seitlich an dem Gehäuse 1 ist ein Umschalter 10 vorgesehen, durch welchen die Zweiradbeleuchtung, also Scheinwerfer und Schlußlicht, wahlweise mit der Lichtmaschine oder mit der in dem Gehäuse enthaltenen Batterie 4 verbunden werden können. Das Gehäuse 1 enthält weiterhin auf seiner Oberseite zwei Kontrollampen 11 und 12, von denen die eine Kontrollampe 11 zur Überwachung des Ladezustandes der Batterie 4 und die andere Kontrollampe 12 zur Überwachung der Funktion von Scheinwerfer und Schlußlicht dienen. An das Gehäuse 1 ist oben ein Solargenerator 13 angesteckt, in dem Stifte 14 in entsprechende Öffnungen 15 an dem Gehäuse 1 eingreifen. Die Anzahl der Solarzellen 16 auf dem Solargenerator 13 ist naturgemäß beliebig und von der Größe der zur Verfügung stehenden Fläche abhängig.

Das Gehäuse 1 ist in einer in der Blickrichtung des Fahrers des Zweirades liegenden Lage am Lenkervorbau 17 des Zweirades (Fig. 2) lösbar angebracht. Zu diesem Zweck ist an der Hinterwand des Gehäuses 1 eine Ausnehmung 18 ausgebildet, in die sich der nach unten weisende Teil 19 des Lenkervorbaues 17 des Zweirades einlegen kann. Andererseits umgreift auch ein die Ausnehmung 18 fortsetzender starrer schellenartiger Ansatz 20 an der Hinterwand des Gehäuses 1 sowohl von hinten den nach unten weisenden Teil 19 als auch von oben den waagerechten Teil 21 unterschiedlichen Durchmessers des Lenkervorbaues 17. In Bohrungen der starren Schellen 22 des Ansatzes 20 greifen Befestigungsbolzen 24 mit konischen Enden 28 ein. Die Bolzen 24 sind mit Hilfe einer Schraube 23 zusammenziehbar, derart, daß sie sich mit ihren konischen Enden 28 beidseitig gegen den Lenkervorbau 17 anlegen. Die Bolzen 24 werden jeweils durch nicht dargestellte federnde Sicherungsringe in ihrer Lage gehalten.

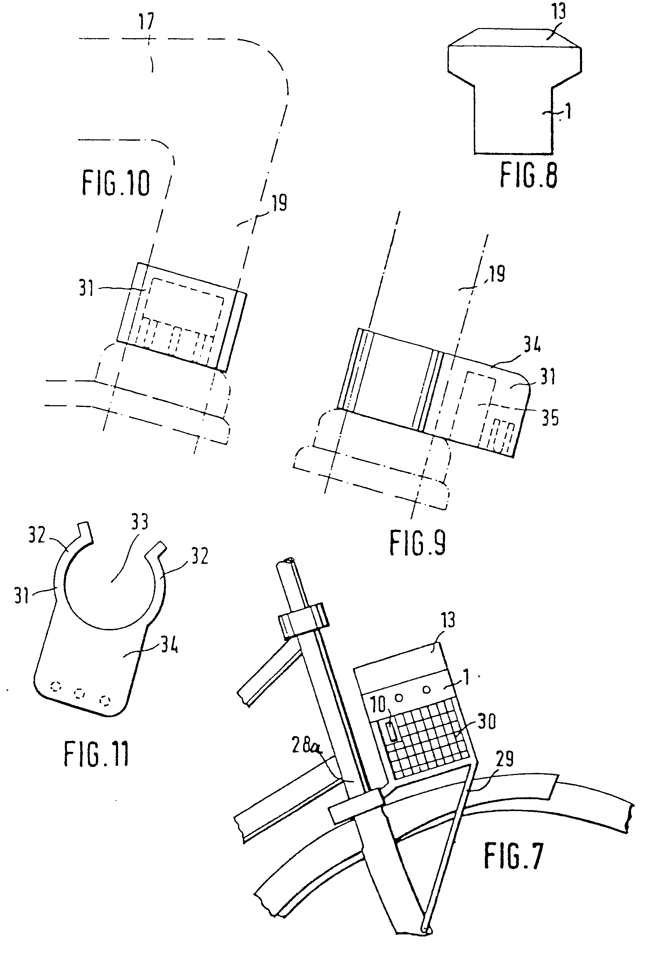

Anstatt an dem Lenkervorbau 17 des Zweirades kann das Gehäuse 1 nach unten an der Lenkgabel 28a des Zweirades im Bereich der Vorderradbremse lösbar befestigt sein. Hierzu ist ein in Fig. 7 dargestelltes, an der Lenkgabel 28a nach Art eines Vorderradgepäckträgers lösbar befestigtes Gestell 29 vorgesehen, das einen käfigartigen Mantel 30 aufweist, in den das Gehäuse 1 eingesetzt ist. Diese Art der Anbringung erlaubt die Verwendung einer größeren Batterie und evtl. auch eines größeren Solargenerators 13 mit mehr Solarzellen. Auch in dieser Lage des Gehäuses 1 ist der an ihm angebrachte Umschalter 10 vom Benutzer des Zweirades leicht zu betätigen, wie auch die Kontrollampen ohne weiteres erkennbar sind.

Wenn das Gehäuse 1 mit der Batterie 4 von dem Zweirad abgenommen worden ist, z. B. zum Wiederaufladen der Batterie, und das Zweirad währenddessen in Benutzung genommen werden soll, wird eine Verbindungskupplung 31 zu Hilfe genommen, die dann als Strombrücke zwischen der Lichtmaschine und der Fahrradbeleuchtung dient (Fig. 9 bis 11). Sie weist eine durch schellenartige Flügel 32 begrenzte Öffnung 33 auf, in die der untere Teil 19 des Lenkervorbaues 17 eingreifen kann, wenn die Verbindungskupplung 31 auf ihn aufgepreßt wird, wobei die schellenartigen Flügel 32 zunächst nachgeben und sich sodann festklemmen. In einem Ansatz 34 ist eine Öffnung 35 für einen Flachstecker vorgesehen, der die Leitungen von der Lichtmaschine und zur Fahrradbeleuchtung enthält, deren Überbrückung die Verbindungskupplung 31 in geeigneter Weise herstellt.

Ein wesentlicher Vorteil der oben beschriebenen Gesamtanordnung besteht darin, daß eine gebräuchliche Zweiradbeleuchtung keiner Veränderung bedarf, wenn sie mit einer Batterie in der geschilderten Anordnung zusätzlich betrieben werden soll.

**Patentansprüche**

1. Am Zweirad lösbar zu befestigende, wiederaufladbare und durch einen Umschalter wechselweise mit der Lichtmaschine wirksam zu machende Batterie (4) für die Zweiradbeleuchtung, die gemeinsam mit dem Umschalter (10) in einem Gehäuse (1) angeordnet ist, das am Lenkervorbau (17) des Zweirades lösbar befestigt ist, dadurch gekennzeichnet, daß das Gehäuse (1) zusätzlich eine in der Blickrichtung des Fahrers befindliche Anzeigevorrichtung (11, 12) über den Ladezustand der Batterie (4) und über die Funktion von Scheinwerfer und Schlußlicht aufweist.

2. Batterie nach Anspruch 1, dadurch gekennzeichnet, daß das Gehäuse (1) auch das Netzladegerät für die Batterie enthält.

3. Batterie nach Anspruch 1, dadurch gekennzeichnet, daß die Anzeigevorrichtung zwei auf der Oberseite des Gehäuses (1) angeordnete Kontrollampen (11, 12) enthält.

4. Batterie nach Anspruch 1, dadurch gekennzeichnet, daß an dem Gehäuse (1) ein Anschluß (14) für einen Solargenerator (13) vorgesehen ist.

5. Batterie nach Anspruch 4, dadurch gekennzeichnet, daß der Solargenerator (13) auf das Gehäuse (1) aufsteckbar ist.

6. Batterie nach Anspruch 1, dadurch gekennzeichnet, daß an der Hinterwand des Gehäuses (1) eine prismenförmige Ausnehmung (18) ausgebildet ist, in die sich der nach unten weisende Teil (19) und der waagerechte Teil (21) des Lenkervorbaus (17) einlegen, wobei die Ausnehmung (18) teilweise durch einen starren schellenartigen Ansatz (20) an der Hinterwand des Gehäuses (1) gebildet ist.

7. Batterie nach Anspruch 6, dadurch gekennzeichnet, daß in Bohrungen der starren Schellen (22) des Ansatzes (20) Befestigungsbolzen (24) mit konischen Enden (28) eingreifen, die unter der Wirkung einer in sie eingebrachten Befestigungsschraube (23) zusammenziehbar sich gegen den Lenkervorbau (17) anlegen.

8. Batterie nach Anspruch 6 und einem der Ansprüche 4 oder 5, dadurch gekennzeichnet, daß der Solargenerator (13) auf die waagerechte Brücke (25) des schellenartigen Ansatzes (20) aufsetzbar ist.

9. Batterie nach Anspruch 8, dadurch gekennzeichnet, daß der Solargenerator (13) an der waagerechten Brücke (25) des schellenartigen Ansatzes (20) durch eine Stiftverbindung (14, 15) lösbar befestigbar ist.

10. Batterie nach den Ansprüchen 7 und 8, dadurch gekennzeichnet, daß der Solargenerator (13) von ihm nach unten abstehende Befestigungsflügel (26) aufweist, die gemeinsam mit den Schellen (22) des Ansatzes (20) des Gehäuses (1) an dem Lenkervorbau (17) befestigbar sind.

11. Batterie nach Anspruch 6, dadurch gekennzeichnet, daß das Gehäuse (1) anstatt an den Lenkervorbau (17) an der Lenkgabel (28a) im Bereich der Vorderradbremse lösbar befestigbar ist.

12. Batterie nach Anspruch 11, dadurch gekennzeichnet, daß das Gehäuse (1) an einem an der Lenkgabel (28a) des Zweirades nach Art eines Vorderradgepäckträgers befestigten Gestell (29) lösbar befestigt ist.

13. Batterie nach Anspruch 12, dadurch gekennzeichnet, daß das Gestell (29) einen käfigartigen Seitenmantel (30) aufweist, in den das Gehäuse (1) eingesetzt ist.

14. Batterie nach Anspruch 1, dadurch gekennzeichnet, daß das Gehäuse (1) gegen eine Verbindungskupplung (31) als Strombrücke zwischen Lichtmaschine und Fahrradbeleuchtung austauschbar ist.

15. Batterie nach Anspruch 1, dadurch gekennzeichnet, daß sie an eine gebräuchliche Zweiradbeleuchtung anschließbar ist.

## Claims

1. A rechargeable battery (4) for two-wheel vehicle lighting systems, which can be detachably mounted on the two-wheel vehicle and rendered operative alternatively with the dynamo means of a change-over switch (10) which is arranged together with the battery in a common housing (1) mounted detachably on the handlebar front end (17), characterized in that the housing (1) comprises in addition indicating means (11, 12) arranged in the driver's line of vision and informing the driver on the charging condition of the battery (4) and the operating condition of head lamp and rear lamp.

2. A battery in accordance with claim 1, characterized in that the housing (1) comprises in addition the mains-operated battery charger.

3. A battery in accordance with claim 1, characterized in that the indicating means comprises two pilot lamps (11, 12) arranged on the top of the housing (1).

4. A battery in accordance with calim 1, characterized in that a connection (14) for a solar generator (13) is provided on the housing (1).

5. A battery in accordance with claim 5, characterized in that the solar generator (13) can be detachably fitted on the housing (1).

6. A battery in accordance with claim 1, characterized in that a prism-shaped recess (18) is provided in the rear wall of the housing (1) for receiving the downwardly extending portion (29) and the horizontal portion (21) of the handlebar front end (17), the recess (18) being partly formed by a rigid clamp-like projection (20) on the rear wall of the housing (1).

7. A battery in accordance with claim 6, characterized in that bores in the rigid clamps (22) of the projection (20) are engaged by mounting bolts (24) with conical end portions (28) which can be drawn together and against the handlebar front end (17) under the effect of a screw (23) inserted into them.

8. A battery in accordance with claim 6 and any of claims 4 or 5, characterized in that the solar generator (13) can be positioned on the horizontal bridge portion (25) of the clamp-like projection (20).

9. A battery in accordance with claim 8, characterized in that the solar generator (13) is detachably fastened on the horizontal bridge portion (25) of the clamplike projection (20) by means of a pin connection (14, 15).

10. A battery in accordance with claims 7 and 8, characterized in that the solar generator (13) comprises downwardly projecting mounting lobes (26) which can be festened on the handlebar front end (17) together with the clamps (22) of the projection (20) of the housing (1).

11. A battery in accordance with claim 6, characterized in that the housing (1) can be detachably mounted not on the handlebar front end (17) but on the front fork (28a) in the area of the front wheel brake.

12. A battery in accordance with claim 11, characterized in that the housing (1) is detachably mounted on a frame (29) mounted on the front fork (18a) of the two-wheel vehicle in the manner of a front wheel luggage rack.

13. A battery in accordance with claim 12, characterized in that the frame (29) comprises cage-like side portions (30) for receiving the housing (1).

14. A battery in accordance with claim 1, characterized in that the housing (1) can be exchanged against coupling means (31) acting as elekctric bridge between the dynamo and the bycicle lighting.

15. A battery in accordance with claim 1, characterized in that it can be connected to any customary two-wheel vehicle lighting.

## Revendications

1. Batterie (4) rechargeable à fixation amovible sur un véhicule à deux roues, cette batterie pouvant agir au moyen d'un commutateur en alternance, avec la dynamo d'éclairage pour d'éclairage du véhicule à deux roues, et étant disposée avec le commutateur (10) dans un boîtier (1) qui est fixé de façon amovible à la potence (17) du guidon du véhicule à deux roues caractérisée en ce que le boîtier (1) présente de plus une installation d'indication (11, 12) se trouvant dans la direction dans laquelle regarde le conducteur, concernant l'étant de charge de la batterie (4) et le fonctionnement du phare et du feu rouge arrière.

2. Batterie selon la revendication 1 caractérisée en ce que le boîtier (1) contient également l'appareil de charge sur secteur pour la batterie.

3. Batterie selon la revendication 1 caractérisée en ce que l'installation d'indication contient deux lampes témoins (11, 12) disposées à la partie supérieure du boîtier (1).

4. Batterie selon la revendication 1 caractérisée en ce que sur le boîtier (1) est prévu une jonction (14) pour un générateur d'énergie solaire (13).

5. Batterie selon la revendication 4 caractérisée en ce que le générateur d'énergie solaire (13) peut être enfiché sur le boîtier (1).

6. Batterie selon la revendication 1 caractérisée en ce que sur la paroi arrière du boîtier (1) est formé un évidement (18) en forme de prisme, dans lequel sont reçues la partie (19) dirigée vers le bas et la partie horizontale (21) de la potence (17) du guidon, l'évidement (18) étant formé partiellement par une saillie (20) rigide en forme de collier de fixation à la paroi arrière du boîtier (1).

7. Batterie selon la revendication 6 caractérisée en ce que des écrous de fixation (24) ayant des extrémités coniques (28) sont reçues dans des alésages des brides rigides (22) de la saillie (20), lesdits écrous sous l'effet d'une vis de fixation (23) qui y est introduite, étant susceptibles de se rapprocher pour s'appuyer contre la potence (17).

8. Batterie selon la revendication 6 et l'une quelconque des revendications 4 ou 5 caractérisée en ce que le générateur d'énergie solaire (13) peut être transporté sur le pont horizontal (25) de la saillie (20) en forme de bride.

9. Batterie selon la revendication 8 caractérisée en ce que le générateur d'énergie solaire (13) peut être fixé amovible sur le pont horizontal (25) de la saillie (20) en forme de bride au moyen d'une jonction par fiches (14, 15).

10. Batterie selon les revendications 7 et 8 caractérisée en ce que le générateur d'énergie solaire (13) présente les ailes des fixation (26) qui s'étendent vers le bas, et qui sont fixées conjointement avec les brides (22) de la saillie (20) du boîtier (1) à la potence (17).

11. Batterie selon la revendication 6 caractérisée en ce que le boîtier (1) au lieu d'être fixé à la potence (17), peut être fixé amovible sur la fourche (28a) dans la zone du frein de la roue avant.

12. Batterie selon la revendication 11 caractérisée en ce que le boîtier (1) est fixé amovible à un châssis (29) fixé à la manière d'un porte-bagage avant à la fourche (28a) du véhicule à deux roues.

13. Batterie selon la revendication 12 caractérisée en ce que le châssis (29) présente une enveloppe (30) en forme de cage, dans laquelle est recu le boîtier (1).

14. Batterie selon la revendication 1 caractérisée en ce que le boîtier (1) peut être échangé contre un connecteur de raccordement (31) établissant la liaison électrique entre la dynamo d'éclairage et l'éclairage du véhicule à deux roues.

15. Batterie selon la revendication 1 caractérisée en ce qu'elle peut être raccordée à un éclairage usuel de véhicule à deux roues.

0 019 144

FIG.1

FIG.2

**FIG.3**

**FIG.4**

FIG.6

FIG.5

FIG.10

FIG.8

FIG.9

FIG.11

FIG.7